# EUROPÄISCHE PATENTSCHRIFT

(11) **EP 1 806 514 B1**
(45) Veröffentlichungstag und Bekanntmachung des Hinweises auf die Patenterteilung: **12.06.2013**
(21) Anmeldenummer: 06022116.5
(22) Anmeldetag: 21.10.2006
(51) Int. Cl.: F16D 23/12, F16D 23/14

(54) **Kupplungsbetätigungsvorrichtung**
Clutch actuating device
Actionneur d'embrayage

(30) Priorität: 19.11.2005 DE 102005055222
(43) Veröffentlichungstag der Anmeldung: 11.07.2007
(73) Patentinhaber: Schaeffler Technologies AG & Co. KG, 91074 Herzogenaurach (DE)
(72) Erfinder: Reitz, Dierk, 76530 Baden-Baden (DE); Pels, Thomas, 46359 Heiden (DE)

(56) Entgegenhaltungen:
- EP-A1- 1 403 545
- WO-A-95/34765
- DE-A1- 3 502 341
- US-A- 2 967 596

## Beschreibung

Die vorliegende Erfindung betrifft eine Kupplungsbetätigungsvorrichtung gemäß dem Oberbegriff des Patentanspruchs 1.

Herkömmliche Kupplungsbetätigungsvorrichtungen wirken beispielsweise mittels einer elektromechanischen Kraftübertragungsstrecke auf ein Ein- bzw. Ausrücklager einer Kupplung ein. Hierzu wird zum Beispiel die Antriebskraft eines Elektromotors genutzt, der über ein Planetengetriebe einen Ausrückhebel betätigen kann, der wiederum das Ausrücklager betätigt.

Die DE 35 02341 A1 offenbart weiterhin eine Kupplungsbetätigung mit einem einer Schneckenradverzahnung nachgeschalteten Schwenkverbindung.

Eine derartige Kupplungsbetätigungsvorrichtung ist aus der JP 2003166557 A bekannt. Dort wird ein Elektromotor 21 eingesetzt, der mittels eines Planetengetriebes den Drehhebel 17 antreibt. Bei einer solchen herkömmlichen Kupplungsbetätigungsvorrichtung ist die Übersetzung des Planetengetriebes begrenzt.

Des weiteren weisen bekannte Doppelkupplungsgetriebe für Kraftfahrzeuge in der Regel einen ersten Kupplungsaktor auf, der eine erste Kupplung betätigt und einen zweiten Kupplungsaktor, der eine zweite Kupplung betätigt. Im Stand der Technik wirken die Kupplungsaktoren auf das jeweilige Ausrücklager der Kupplungen ein, wobei ein herkömmliches Doppelkupplungsgetriebe zwei Eingangswellen aufweist, die unabhängig voneinander durch je eine zugeordnete Kupplung mit dem Motor des Kraftfahrzeuges verbindbar sind. Im Falle von Doppelkupplungsgetrieben, die häufig auch als Parallelschaltgetriebe bezeichnet werden, kommen insbesondere Trockenkupplungen zum Einsatz. Jedoch ist die Verwendung von Nasskupplungen ebenfalls möglich.

Zur Betätigung der Doppelkupplung eines Doppelkupplungsgetriebes müssen die beiden Kupplungsaktoren auf zwei koaxial angeordnete Einrück- bzw. Ausrücklager einwirken. Dabei kann eine bauräumliche Verschachtelung von zwei herkömmlichen Kupplungsausrücksystemen unter den normalerweise vorherrschenden sehr engen Bauraumverhältnissen erhebliche Probleme aufwerfen.

Ausgehend von dem oben genannten Stand der Technik besteht daher die Aufgabe der vorliegenden Erfindung darin, eine elektromechanische Kraftübertragungsstrecke zwischen einem Kupplungsaktor und einem Aus- bzw. Einrücklager einer Kupplung derart zu verbessern, dass eine höhere Übersetzung zwischen einem Antrieb und einem Drehhebel, der ein Ausrücklager betätigt, realisierbar ist.

Diese Aufgabe wird gelöst durch eine Kupplungsbetätigungsvorrichtung mit den Merkmalen des Patentanspruchs 1.

Demnach weist die erfindungsgemäße Kupplungsbetätigungsvorrichtung, die insbesondere für eine Kupplung eines Kraftfahrzeuges vorgesehen ist, einen Drehhebel als Teil einer elektromechanischen Kraftübertragungsstrecke auf, der mittels einer Gabel ein Ausrücklager der Kupplung betätigt, wobei der Drehhebel über ein Planetengetriebe von einem Antrieb angetrieben und dem Planetengetriebe ein Schneckengetriebe vor- oder nachgeschaltet ist.

Vorzugsweise wird ein Doppelkupplungsgetriebe mit der erfindungsgemäßen Kupplungsbetätigungsvorrichtung betätigt, wobei ein erster Drehhebel mittels einer ersten Gabel auf ein erstes Ausrücklager einer ersten Kupplung und ein zweiter Drehhebel mittels einer zweiten Gabel auf ein zweites Ausrücklager einer zweiten Kupplung einwirkt. Jeder Drehhebel wird durch ein Planetengetriebe angetrieben, dem ein Schneckengetriebe vorgeschaltet ist.

Der Antrieb jedes Schneckengetriebes erfolgt bevorzugt mittels eines Elektromotors, wobei die Gesamtübersetzung von Planetengetriebe und Schneckengetriebe pro Umdrehung des Elektromotors im Bereich von 0,9 bis 1,2 mm Ausrückweg der Gabel liegt.

Vorteilhafterweise ist zwischen einem Planetenträger und einer Hohlradfixierung des Planetengetriebes eine Kompensationsfeder angeordnet. Bevorzugt ist die Kompensationsfeder als eine Spiralfeder ausgebildet.

Um eine lösbare Aktoreneinheit zwischen den Getrieben und den Drehhebeln zu schaffen, ist jeweils zwischen einem Ausgang des Planetengetriebes und dem zugeordneten Drehhebel eine spielfreie Axialverzahnung vorgesehen.

Im Falle der Betätigung eines Doppelkupplungsgetriebes sind die Planetengetriebe, die Schneckengetriebe und die Drehhebel ineinander verschachtelt montiert, um eine kompakte Baueinheit zu erreichen.

Die Erfindung soll unter Bezugnahme auf die zugehörigen Zeichnungen näher erläutert werden.

Es zeigen:
Figur 1 prinzipieller Aufbau einer erfindungsgemäßen Kupplungsbetätigungsvorrichtung für ein automatisiertes Schaltgetriebe;
Figur 2 eine Teilansicht der ersten Ausführungsform nach der Figur 1, wobei eine Axialverzahnung vorhanden ist;
Figur 3 eine weitere Ausführungsform der erfindungsgemäßen Kupplungsbetätigungsvorrichtung für ein Parallelschaltgetriebe;
Figur 4 eine Ausgestaltung der Ausführung der erfindungsgemäßen Kupplungsbetätigungsvorrichtung für ein Parallelschaltgetriebe nach Figur 3.

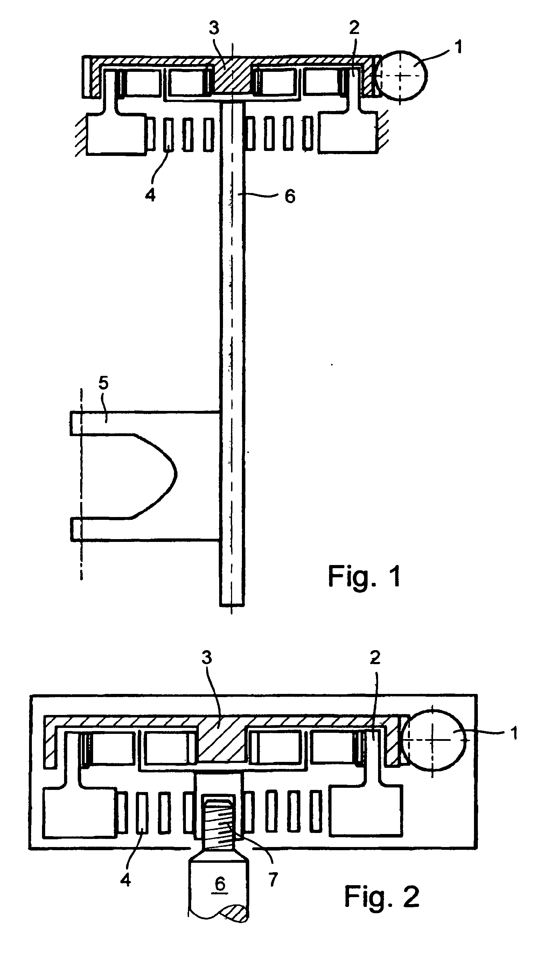

In der Figur 1 ist der prinzipielle Aufbau einer erfindungsgemäßen Kupplungsbetätigungsvorrichtung dargestellt, wobei ein Schneckenrad 1 eines Schneckengetriebes durch einen Elektromotor (nicht dargestellt) angetrieben wird. Das Schneckenrad 1 treibt das Zwischenrad 3 eines Planetengetriebes an. Das Planetengetriebe umfasst weiterhin ein Hohlrad 2. Ein Drehhebel 6 wird durch das Planetengetriebe angetrieben und verdreht und betätigt mit einer Gabel 5 ein Ausrücklager (nicht dargestellt) einer zugeordneten Kupplung (nicht dargestellt).

Eine Kompensationsfeder 4 wird beispielsweise als Spiralfeder zwischen einem Planetenträger und einer Hohlradfixierung (oder im unteren Lager) integriert. Beispielsweise werden folgende Übersetzungen nach der Figur 1 eingesetzt: Schneckenrad 1 mit 2,8 mm pro Umdrehung; Hohlrad 2 mit 56 Zähnen; Zwischenrad 3 mit 68 Zähnen außen und 16 Zähnen gegenüber einem Sonnenrad. Die Übersetzung des Planetensatzes beträgt damit 4,4. Durch die Kombination aus Schneckengetriebe und Planetengetriebe ergibt sich pro Umdrehung des Elektromotors eine Gesamtübersetzung (Ausrückweg) an der Gabel von 0,9 mm bis 1,2 mm.

In der Figur 2 ist eine Axialverzahnung 7 dargestellt, die zwischen Getriebe und Drehhebel 6 vorgesehen ist, um eine lösbare Aktoreinheit zu schaffen. Die Axialverzahnung 7 ist spielfrei ausgebildet und vorzugsweise am oberen Wellenende des Drehhebels 6 angeordnet.

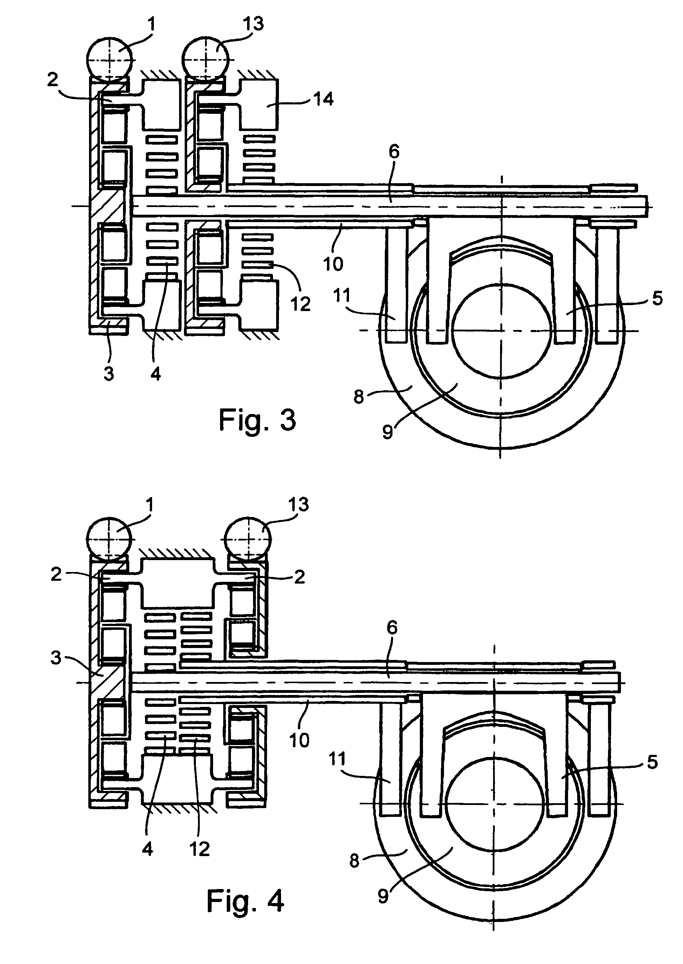

Bei einer Doppelkupplung, wie in der Figur 3 nach einer weiteren Ausführungsform der vorliegenden Erfindung gezeigt, werden zwei Drehhebel 6 und 10 eingebaut, die voneinander unabhängig arbeiten können. Hierzu ist eine geschickte Verschachtelung und Anordnung der Bauteile in einer Kupplungsglocke notwendig, um ausreichend Betätigungsweg zu gewährleisten. Aus unterschiedlichen Komponenten und Lagerungen lassen sich verschiedene Drehhebelvarianten aufbauen.

Ein erstes Schneckenrad 1 wird durch einen Elektromotor (nicht dargestellt) angetrieben und treibt wiederum das Zwischenrad 3 eines ersten Planetengetriebes an. Ein Hohlrad 2 und eine Kompensationsfeder 4 sind wie bei der ersten Ausführungsform nach der Figur 1 ebenfalls vorhanden. Dieses erste Planetengetriebe treibt den ersten Drehhebel 6 an, der wiederum über die erste Gabel 5 auf ein erstes Ausrücklager 8 einer ersten Kupplung einwirkt. Ein zweites Schneckenrad 13 wird durch einen Elektromotor (nicht dargestellt) angetrieben und treibt wiederum das zweite Zwischenrad eines zweiten Planetengetriebes an. Ein zweites Hohlrad 14 und eine Kompensationsfeder 12 sind ebenfalls vorgesehen. Dieses zweite Planetengetriebe treibt den zweiten Drehhebel 10 an, der wiederum über die zweite Gabel 11 auf ein zweites Ausrücklager 9 einer zweiten Kupplung einwirkt.

In der Figur 4 ist eine weitere Ausführungsform der Erfindung dargestellt, bei der ein gemeinsames Hohlrad 2 für beide Planetengetriebe Verwendung findet. Ansonsten entspricht der Aufbau der Kupplungsbetätigungsvorrichtung nach der Figur 3.

Prinzipiell lässt sich das Schneckengetriebe dem Planetengetriebe vor- oder nachschalten. In den gezeigten Ausführungsformen ist das Schneckengetriebe dem Planetengetriebe vorgeschaltet.

### Bezugszeichenliste

- 1: Schneckenrad
- 2: Hohlrad
- 3: Zwischenrad
- 4: Kompensationsfeder
- 5: Gabel, erste
- 6: Drehhebel, erster
- 7: Axialverzahnung
- 8: Ausrücklager, erstes
- 9: Ausrücklager, zweites
- 10: Drehhebel, zweiter
- 11: Gabel, zweite
- 12: Kompensationsfeder
- 13: Schneckenrad
- 14: Hohlrad

## Patentansprüche

1. Kupplungsbetätigungsvorrichtung für eine Kupplung eines Kraftfahrzeuges, mit einem Drehhebel (6, 10) als Teil einer elektromechanischen Kraftübertragungsstrecke, wobei der Drehhebel (6, 10) mittels einer Gabel (5, 11) ein Ausrücklager (8, 9) der Kupplung betätigt und **dadurch gekennzeichnet, dass** der Drehhebel (6, 10) über ein Planetengetriebe bestehend aus Zwischenrad (3), Planetenräder, Hohlrad (2) und
Planetenradträger von einem Antrieb angetrieben ist, indem der Drehhebel (6, 10) mit dem Planetenradträger des Planetengetriebes verbunden ist und wobei dem Planetengetriebe ein Schneckengetriebe (1) vorgeschaltet ist.

2. Kupplungsbetätigungsvorrichtung nach Anspruch 1, **dadurch gekennzeichnet, dass** ein Doppelkupplungsgetriebe betätigt wird, wobei ein erster Drehhebel (6) mittels einer ersten Gabel (5) auf ein erstes Ausrücklager (8) einer ersten Kupplung einwirkt und ein zweiter Drehhebel (10) mittels einer zweiten Gabel (11) auf ein zweites Ausrücklager (9) einer zweiten Kupplung einwirkt, und jeder Drehhebel (6, 10) durch ein Planetengetriebe angetrieben, dem ein Schneckengetriebe vorgeschaltet.

3. Kupplungsbetätigungsvorrichtung nach Anspruch 1 oder 2, **dadurch gekennzeichnet, dass** der Antrieb jedes Schneckengetriebes mittels eines Elektromotors erfolgt.

4. Kupplungsbetätigungsvorrichtung nach Anspruch 3, **dadurch gekennzeichnet, dass** die Gesamtübersetzung von Planetengetriebe und Schneckengetriebe pro Umdrehung des Elektromotors im Bereich von 0,9 bis 1,2 mm Ausrückweg der Gabel (5, 11) liegt.

5. Kupplungsbetätigungsvorrichtung nach Anspruch 1 oder 2, **dadurch gekennzeichnet, dass** zwischen einem Planetenträger und einer Hohlradfixierung des Planetengetriebes eine Kompensationsfeder (4, 12) angeordnet ist.

6. Kupplungsbetätigungsvorrichtung nach Anspruch 5, **dadurch gekennzeichnet, dass** die Kompensationsfeder (4, 12) eine Spiralfeder ist.

7. Kupplungsbetätigungsvorrichtung nach Anspruch 1, **dadurch gekennzeichnet, dass** zwischen einem Ausgang des Planetengetriebes und dem Drehhebel (6, 10) eine Axialverzahnung (7) vorgesehen ist.

8. Kupplungsbetätigungsvorrichtung für ein Doppelkupplungsgetriebe nach Anspruch 2, **dadurch gekennzeichnet, dass** für die Betätigung des Doppelkupplungsgetriebes die Planetengetriebe, die Schneckengetriebe und die Drehhebel (6, 10) ineinander verschachtelt montiert sind.

9. Kupplungsbetätigungsvorrichtung nach Anspruch 2, **dadurch gekennzeichnet, dass** ein Hohlrad (2) für beide Planetengetriebe gemeinsam vorgesehen ist.

10. Kupplungsbetätigungsvorrichtung für ein Doppelkupplungsgetriebe nach Anspruch 2, **dadurch gekennzeichnet, dass** die Drehachsen der beiden Drehhebel (6, 10) koaxial angeordnet sind.

## Claims

1. Clutch actuating apparatus for a clutch of a motor vehicle, having a rotary lever (6, 10) as part of an electromechanical force transmission path, the rotary lever (6, 10) actuating a disengagement bearing (8, 9) of the clutch by means of a fork (5, 11), and **characterized in that** the rotary lever (6, 10) is driven by a drive via a planetary gear mechanism comprising intermediate gear (3), planetary gears, internal gear (2) and planetary gear carrier, by the rotary lever (6, 10) being connected to the planetary gear carrier of the planetary gear mechanism, and a worm gear mechanism (1) being connected upstream of the planetary gear mechanism.

2. Clutch actuating apparatus according to Claim 1, **characterized in that** a double clutch transmission is actuated, a first rotary lever (6) acting by means of a first fork (5) on a first disengagement bearing (8) of a first clutch and a second rotary lever (10) acting by means of a second fork (11) on a second disengagement bearing (9) of a second clutch, and each rotary lever (6, 10) being driven by a planetary gear mechanism, upstream of which a worm gear mechanism is connected.

3. Clutch actuating apparatus according to Claim 1 or 2, **characterized in that** the drive of each worm gear mechanism takes place by means of an electric motor.

4. Clutch actuating apparatus according to Claim 3, **characterized in that** the overall transmission ratio of planetary gear mechanism and worm gear mechanism per revolution of the electric motor lies in the range from 0.9 to 1.2 mm disengagement travel of the fork (5, 11).

5. Clutch actuating apparatus according to Claim 1 or 2, **characterized in that** a compensation spring (4, 12) is arranged between a planetary carrier and an internal-gear fixing means of the planetary gear mechanism.

6. Clutch actuating apparatus according to Claim 5, **characterized in that** the compensation spring (4, 12) is a helical spring.

7. Clutch actuating apparatus according to Claim 1, **characterized in that** an axial toothing system (7) is provided between an output of the planetary gear mechanism and the rotary lever (6, 10).

8. Clutch actuating apparatus for a double clutch transmission according to Claim 2, **characterized in that** the planetary gear mechanisms, the worm gear mechanisms and the rotary levers (6, 10) are mounted such that they are nested inside one another for the actuation of the double clutch transmission.

9. Clutch actuating apparatus according to Claim 2, **characterized in that** one internal gear (2) is provided for both planetary gear mechanisms jointly.

10. Clutch actuating apparatus for a double clutch transmission according to Claim 2, **characterized in that** the rotational axes of the two rotary levers (6, 10) are arranged coaxially.

## Revendications

1. Dispositif d'actionnement d'embrayage pour un embrayage d'un véhicule automobile, comprenant un levier pivotant (6, 10) en tant que partie d'une section de transfert de force électromécanique, le levier pivotant (6, 10) actionnant un palier de débrayage (8, 9) de l'embrayage au moyen d'une fourche (5, 11), **caractérisé en ce que** le levier pivotant (6, 10) est entraîné par le biais d'une transmission planétaire constituée d'une roue intermédiaire (3), de satellites, d'une couronne dentée (2) et de porte-satellites, le levier pivotant (6, 10) étant relié au porte-satellites de la transmission planétaire et une transmission à vis sans fin (1) étant montée en amont de la transmission planétaire.

2. Dispositif d'actionnement d'embrayage selon la revendication 1, **caractérisée en ce qu'**une transmission à double embrayage est actionnée, un premier levier pivotant (6) agissant au moyen d'une première fourche (5) sur un premier palier de débrayage (8) d'un premier embrayage et un deuxième levier pivotant (10) agissant au moyen d'une deuxième fourche (11) sur un deuxième palier de débrayage (9) d'un deuxième embrayage, et chaque levier pivotant (6, 10) étant entraîné par une transmission planétaire en amont de laquelle est montée une transmission à vis sans fin.

3. Dispositif d'actionnement d'embrayage selon la revendication 1 au 2, **caractérisé en ce que** l'entraînement de chaque transmission à vis sans fin s'effectue au moyen d'un moteur électrique.

4. Dispositif d'actionnement d'embrayage selon la revendication 3, **caractérisé en ce que** le rapport de transmission total de la transmission planétaire et de la transmission à vis sans fin pour chaque tour du moteur électrique est situé dans une plage de 0,9 à 1,2 mm de course de débrayage de la fourche (5, 11).

5. Dispositif d'actionnement d'embrayage selon la revendication 1 ou 2, **caractérisé en ce qu'**un ressort de compensation (4, 12) est disposé entre un porte-planétaire et une fixation de couronne dentée de la transmission planétaire.

6. Dispositif d'actionnement d'embrayage selon la revendication 5, **caractérisé en ce que** le ressort de compensation (4, 12) est un ressort spiral.

7. Dispositif d'actionnement d'embrayage selon la revendication 1, **caractérisé en ce qu'**une denture axiale (7) est prévu entre une sortie de la transmission planétaire et le levier pivotant (6, 10).

8. Dispositif d'actionnement d'embrayage pour une transmission à double embrayage selon la revendication 2, **caractérisé en ce que** pour l'actionnement de la transmission à double embrayage, la transmission planétaire, la transmission à vis sans fin et les leviers pivotants (6, 10) sont montés de manière emboîtée les uns dans les autres.

9. Dispositif d'actionnement d'embrayage selon la revendication 2, **caractérisé en ce qu'**une couronne dentée (2) est prévue en commun pour les deux transmissions planétaires.

10. Dispositif d'actionnement d'embrayage pour une transmission à double embrayage selon la revendication 2, **caractérisé en ce que** les axes de rotation des deux leviers pivotants (6, 10) sont disposés coaxialement.
